# EUROPÄISCHE PATENTANMELDUNG

(11) **EP 2 244 025 A2**
(43) Veröffentlichungstag der Anmeldung: **27.10.2010**
(21) Anmeldenummer: 10001398.6
(22) Anmeldetag: 11.02.2010
(51) Int. Cl.: F24F 6/02

(54) **Wasserabscheider für eine Luftbefeuchtungsvorrichtung**

(30) Priorität: 16.04.2009 DE 102009017630
(71) Anmelder: Klingenburg GmbH, 45968 Gladbeck (DE)
(72) Erfinder: Klingenburg, Hans, 45239 Essen (DE)
(74) Vertreter: Lelgemann, Karl-Heinz

(57) **Zusammenfassung**

Ein Wasserabscheider (1) für eine Luftbefeuchtungsvorrichtung ist stromab einer auf eine Luftverwirbelungsstufe und eine Düsenstufe folgenden Mischstrecke der Luftbefeuchtungsvorrichtung angeordnet und als Paket aus zueinander beabstandeten Platten (7) ausgebildet ist.

Um den Wirkungsgrad einer mit einem derartigen Wasserabscheider (1) versehenen Luftbefeuchtungsvorrichtung zu erhöhen, wird vorgeschlagen, dass die dem aus der Luftbefeuchtungsvorrichtung austretenden Feuchtluftstrom (5) ausgesetzten Oberflächen der Platten (7) des Wasserabscheiders (1) mit einem Zeolithwerkstoff beschichtet sind.

## Beschreibung

Die Erfindung bezieht sich auf einen Wasserabscheider für eine Luftbefeuchtungsvorrichtung, der stromab einer auf eine Luftverwirbelungsstufe und eine Düsenstufe folgenden Mischstrecke der Luftbefeuchtungsvorrichtung angeordnet und als Paket aus zueinander beabstandeten Platten ausgebildet ist.

Derartige Wasserabscheider dienen üblicherweise dazu, dem aus der Luftbefeuchtungsvorrichtung austretenden Feuchtluftstrom überschüssiges Wasser zu entziehen, welches auch nach der Mischstrecke noch als Feinstwassertröpfchen, -partikel, Aerosole ud.dgl. im Feuchtluftstrom vorhanden sein kann. Dieses überschüssige Wasser wird dann in geeigneter Weise aus dem Wasserabscheider abgeführt und beispielsweise erneut der Düsenstufe der Luftbefeuchtungsvorrichtung zugeführt.

Ausgehend von dem vorstehend geschilderten Stand der Technik liegt der Erfindung die Aufgabe zugrunde, einen Wasserabscheider für eine Luftbefeuchtungsvorrichtung zu schaffen, mittels dem der Wirkungsgrad der Luftbefeuchtungsvorrichtung erheblich erhöht werden kann. Darüber hinaus soll mittels der Erfindung erreicht werden, dass am Wasserabscheider anfallendes Überschusswasser minimiert wird bzw. kein Überschusswasser mehr auftritt.

Diese Aufgabe wird erfindungsgemäß dadurch gelöst, dass die dem aus der Luftbefeuchtungsvorrichtung austretenden Feuchtluftstrom ausgesetzten Oberflächen der Platten des Wasserabscheiders mit einem Zeolithwerkstoff beschichtet sind und dass der Wasserabscheider als Nachverdunstungsstufe der Luftbefeuchtungsvorrichtung fungiert. Durch die Zeolithwerkstoff-Beschichtung der Platten wird erreicht, dass im den Wasserabscheider durchströmenden Feuchtluftstrom noch vorhandenes, unverdunstetes Wasser in Form von feinsten Wassertröpfchen, - partikeln, Aerosolen ud.dgl. dem Feuchtluftstrom entzogen wird. Dieses unverdunstete Wasser wird in der Zeolithwerkstoff-Beschichtung der Platten aufgenommen und gespeichert. Wenn an den entsprechenden Oberflächen Anteile des Feuchtluftstroms vorbeiströmen, die noch nicht mit Wasser gesättigt sind, werden die in den Zeolithwerkstoff-Beschichtungen gespeicherten Wassermengen in diese Anteile des Feuchtluftstroms hinein verdunstet. Hierdurch lässt sich ein erheblich erhöhter Wirkungsgrad der Luftbefeuchtungsvorrichtung als Ganzes erreichen, wobei darüber hinaus die Menge des am Wasserabscheider anfallenden Überschusswassers erheblich reduziert wird. Im Falle der Erfindung wirkt der entsprechend gestaltete Wasserabscheider quasi als Nachverdunster; das dort anfallende und ab- bzw. rückzuführende Überschusswasser wird erfindungsgemäß erheblich reduziert; dies kann soweit gehen, dass am Wasserabscheider bzw. Nachverdunster überhaupt kein Überschusswasser mehr anfällt.

Eine weitere Erhöhung des Wirkungsgrads der Luftbefeuchtungsvorrichtung wird erreicht, wenn die Platten des Wasserabscheiders in Strömungsrichtung des Feuchtluftstroms wellig gekrümmt ausgebildet sind.

Als Zeolithwerkstoff kommt vorteilhaft ein synthetischer Nano-Zeolith mit einer Partikelgröße < 100 nm zum Einsatz. Dieser Nano-Zeolith kann so gewählt sein, dass er eine homogene Porengrößenverteilung mit einem Porendurchmesser < 1,5 nm, vorzugsweise von 0,4 nm, besitzt.

Gemäß einer vorteilhaften Ausführungsform liegen die Partikel des Zeolithwerkstoffs in nano-kristalliner Form vor.

Die Zeolithwerkstoff-Beschichtung kann vorteilhaft eine Dicke zwischen 0,2 bis 100, vorzugsweise zwischen 1 bis 2 µ (10⁻⁶ₘ) aufweisen.

Im Folgenden wird die Erfindung anhand einer Ausführungsform unter Bezugnahme auf die Zeichnung näher erläutert.

Es zeigen:
- Figur 1: eine Prinzipdarstellung einer Luftbefeuchtungsvorrichtung mit einem erfindungsgemäßen Wasserabscheider;
- Figur 2: eine perspektivische Darstellung des prinzipiellen Aufbaus einer Ausführungsform eines erfindungsgemäßen Wasserabscheiders; und
- Figur 3: eine Darstellung eines Pakets aus zur Durchströmungsrichtung des Wasserabscheiders wellenförmig gekrümmten Platten.

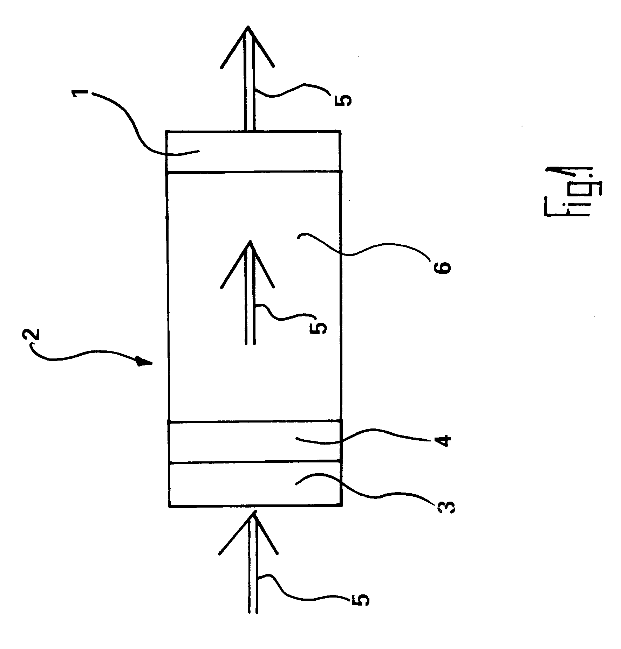

Ein im Folgenden anhand einer Ausführungsform unter Bezugnahme auf die Figuren 1 bis 3 näher erläuterter erfindungsgemäßer Wasserabscheider 1 ist Bestandteil einer in Figur 1 prinzipiell dargestellten Luftbefeuchtungsvorrichtung 2.

Zu der Luftbefeuchtungsvorrichtung 2 gehört eingangsseitig eine Luftverwirbelungsstufe 3 sowie eine Düsenstufe 4. In der Luftverwirbelungsstufe 3 wird der in die Luftbefeuchtungsvorrichtung 2 eintretende Luftstrom 5 verwirbelt. In der Düsenstufe 4 wird in den Luftstrom 5 Wasser eingedüst. Selbstverständlich ist es grundsätzlich auch möglich, die Düsenstufe 4 innerhalb der Luftverwirbelungsstufe 3 vorzusehen oder die Luftverwirbelungsstufe 3 nahe der Düsenstufe 4 stromab derselben anzuordnen.

Nachdem der Luftstrom 5 die Luftverwirbelungsstufe 3 und die Düsenstufe 4 durchströmt hat, nimmt er in einer Mischstrecke 6 der Luftbefeuchtungsvorrichtung 2 das in ihn eingedüste Wasser als Feuchtigkeit auf.

Bevor der nunmehr befeuchtete Luftstrom 5 aus der Luftbefeuchtungsvorrichtung 2 austritt, durchströmt er den am ausgangsseitigen Endabschnitt der Luftbefeuchtungsvorrichtung 2 vorgesehenen Wasserabscheider 1.

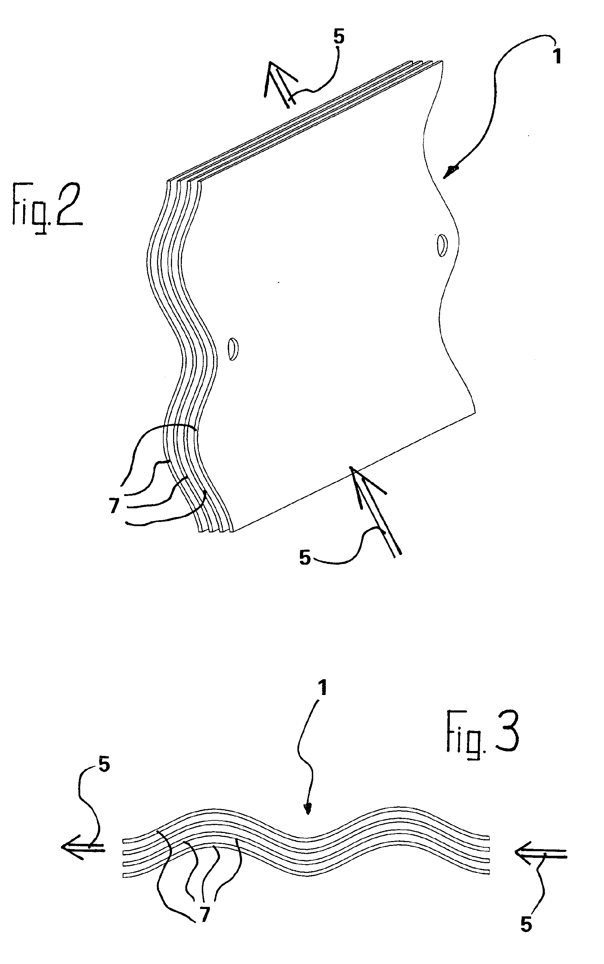

Der Wasserabscheider 1 ist, wie sich am besten aus den Figuren 2 und 3 ergibt, aus einem Paket zueinander parallel und mit Abstand angeordneter Platten 7 ausgebildet. Durch den Zwischenraum strömt, wie in den Figuren 2 und 3 durch die Pfeile angezeigt, der Luftstrom bzw. Feuchtluftstrom 5.

Die Platten 7 des Wasserabscheiders 1 sind an ihren dem durch den Wasserabscheider 1 durchströmenden Feuchtluftstrom 5 ausgesetzten Oberflächen mit einem Zeolithwerkstoff beschichtet. Darüber hinaus sind die Platten - in Strömungsrichtung des Feuchtluftstroms 5 gesehen - wellenförmig gekrümmt ausgebildet.

Bei dem eingesetzten Zeolithwerkstoff handelt es sich z.B. um einen synthetischen Nano-Zeolith mit einer Partikelgröße, die unterhalb von 1000 nm liegt. Der Nano-Zeolith kann auch so gewählt sein, dass er eine homogene Porengrößenverteilung mit einem Porendurchmesser besitzt, der z.B. 0,4 nm beträgt.

Die Partikel des Zeolithwerkstoffs können in nano-kristalliner Form vorliegen.

Die Dicke der Zeolithwerkstoff-Beschichtung kann zwischen 0,2 bis 100, vorzugsweise zwischen 1 bis 2 µ (10⁻⁶ m), betragen.

Wenn der Feuchtluftstrom 5 durch den Wasserabscheider 1 durchtritt, wird in ihm noch vorhandenes, nicht verdunstetes Wasser, welches in Form von feinsten Wassertröpfchen, - partikeln, Aerosolen od.dgl. auch nach der Mischstrecke 6 der Luftbefeuchtungsvorrichtung 2 noch vorhanden sein kann, entzogen, indem es an den dem Feuchtluftstrom 5 ausgesetzten und mit der Zeolithwerkstoff-Beschichtung versehenen Platten 7 angelagert und gespeichert wird. Von Anteilen des Feuchtluftstroms 5, die bei Eintritt in den Wasserabscheider 1 noch nicht mit Feuchtigkeit gesättigt sind, wird in der Zeolithwerkstoff-Schicht der Platten 7 gespeichertes Wasser aufgenommen.

Der Wasserabscheider 1 ist entsprechend so gestaltet, dass er einerseits etwaig im Feuchtluftstrom 5 noch vorhandene Mengen unverdunsteten Wassers diesem Feuchtluftstrom 5 entzieht und andererseits dieses unverdunstete Wasser an solche Anteile des Feuchtluftstroms 5 allmählich abgibt, die noch nicht mit Feuchtigkeit gesättigt sind. Der Wasserabscheider 1 arbeitet somit quasi als Nachverdunster. Hierdurch wird üblicherweise erreicht, dass der Anteil des in der Düsenstufe 4 der Luftbefeuchtungsvorrichtung 2 in den Luftstrom 5 eingedüsten Wassers, der vom Luftstrom bzw. vom Feuchtluftstrom 5 innerhalb der Luftbefeuchtungsvorrichtung 2 aufgenommen wird, erheblich erhöht ist, da der Feuchtluftstrom 5 auch noch bei seinem Durchtritt durch den Wasserabscheider 1 Wasser aufnimmt, indem in der Zeolithwerkstoff-Beschichtung der Platten 7 gespeichertes Wasser in den durch den Wasserabscheider 1 strömenden Feuchtluftstrom 5 hinein verdunstet wird.

## Patentansprüche

1. Wasserabscheider für eine Luftbefeuchtungsvorrichtung (2), der stromab einer auf eine Luftverwirbelungsstufe (3) und eine Düsenstufe (4) folgenden Mischstrecke (6) der Luftbefeuchtungsvorrichtung (2) angeordnet und als Paket aus zueinander beabstandeten Platten (7) ausgebildet ist, **dadurch gekennzeichnet, dass** die dem aus der Luftbefeuchtungsvorrichtung (2) austretenden Feuchtluftstrom (5) ausgesetzten Oberflächen der Platten (7) des Wasserabscheiders (1) mit einem Zeolithwerkstoff beschichtet sind, und dass der Wasserabscheider (1) als Nachverdunstungsstufe der Luftbefeuchtungsvorrichtung (2) fungiert.

2. Wasserabscheider nach Anspruch 1, bei dem die Platten (7) des Wasserabscheiders (1) in Strömungsrichtung des Feuchtluftstroms (5) wellig gekrümmt ausgebildet sind.

3. Wasserabscheider nach Anspruch 1 oder 2, bei dem der Zeolithwerkstoff als synthetischer Nano-Zeolith mit einer Partikelgröße < 1000 nm ausgebildet ist.

4. Wasserabscheider nach Anspruch 3, bei dem der Nano-Zeolith so gewählt ist, dass er eine homogene Porengrößenverteilung mit einem Porendurchmesser < 1,5 nm, vorzugsweise von 0,4 nm, besitzt.

5. Wasserabscheider nach Anspruch 3 oder 4, bei dem die Partikel des Zeolithwerkstoffs in nano-kristalliner Form vorliegen.

6. Wasserabscheider nach einem der Ansprüche 3 bis 5, bei dem die Dicke der Beschichtung 0,2 bis 100, vorzugsweise 1 bis 2 µ (10⁻⁶ m), aufweist.
